# EUROPÄISCHE PATENTANMELDUNG

(11) **EP 3 789 668 A1**
(43) Veröffentlichungstag der Anmeldung: **10.03.2021**
(21) Anmeldenummer: 20194793.4
(22) Anmeldetag: 07.09.2020
(51) Int. Cl.: F21V 8/00

(54) **BELEUCHTUNGSVORRICHTUNG MIT LICHTLEITER SOWIE FAHRZEUG UND VERFAHREN**

(30) Priorität: 09.09.2019 DE 102019124073
(71) Anmelder: Lisa Dräxlmaier GmbH, 84137 Vilsbiburg (DE)
(72) Erfinder: Zaviyalov, Alexandr, 85591 Vaterstetten (DE); Kiermaier, Josef, 84339 Unterdietfurt (DE); Wimmer, Markus, 94437 Mamming (DE)

(57) **Zusammenfassung**

Eine Beleuchtungsvorrichtung (1) weist einen flächigen Lichtleiter (2) mit mindestens einer randseitigen Lichteinkopplungsfläche (3) und mindestens einer Lichtauskopplungsstruktur (4) an einer ihrer Flachseiten (5a), mindestens eine erste Lichtquelle (7a, 7b, 7c), die zur Einkopplung von Licht einer ersten Farbe (Lr, Lg, Lb) in die Lichteinkopplungsfläche (3) eingerichtet ist und mindestens eine dazu örtlich versetzte zweite Lichtquelle (7a, 7b, 7c), die zur Einkopplung von Licht einer zweiten Farbe (Lr, Lg, Lb) in die gleiche Lichteinkopplungsfläche (3) eingerichtet ist, aufweist, wobei in dem Lichtleiter (2) zwischen der Lichteinkopplungsfläche (3) und der Lichtauskopplungsstruktur (4) ein diffuser Bereich (4a) vorhanden ist. Ein Fahrzeug (F) weist mindestens eine Beleuchtungsvorrichtung (1) auf. Bei einem Verfahren wird unterschiedlich farbiges Licht (Lr, Lg, Lb) von lokal unterschiedlichen Orten in eine Lichteinkopplungsfläche (3) eines flächigen Lichtleiters (2) eingekoppelt und verläuft dann durch einen diffusen Bereich (8) des Lichtleiters (8), bevor es mittels einer Lichtauskopplungsstruktur (4) ausgekoppelt wird.

## Beschreibung

### Technisches Gebiet

Die vorliegende Erfindung betrifft eine Beleuchtungsvorrichtung, aufweisend einen flächigen Lichtleiter mit mindestens einer randseitigen Lichteinkopplungsfläche und mindestens einer Lichtauskopplungsstruktur an einer seiner Flachseiten, mindestens einer ersten Lichtquelle, die zur Einkopplung von Licht einer ersten Farbe in die Lichteinkopplungsfläche eingerichtet ist, und mindestens einer dazu in Bezug auf die Lichteinkopplungsfläche versetzt angeordneten zweiten Lichtquelle, die zur Einkopplung von Licht einer zweiten Farbe in die gleiche Lichteinkopplungsfläche eingerichtet ist. Die vorliegende Erfindung betrifft auch ein Fahrzeug mit mindestens einer solchen Beleuchtungsvorrichtung. Die vorliegende Erfindung betrifft auch ein Beleuchtungsverfahren. Die vorliegende Erfindung ist besonders vorteilhaft anwendbar auf eine Nutzung als Interieurbeleuchtung eines Fahrzeug, bei dem eine Lichtauskopplungsfläche des Lichtleiters durch Fahrzeuginsassen direkt sichtbar ist.

### Stand der Technik

Es sind Beleuchtungsvorrichtungen der betreffenden Art grundsätzlich bekannt. Dabei ist nachteilig, dass sich bei Einstrahlung von Licht unterschiedlicher Farbe aufgrund der hauptsächlich auf innerer Totalreflexion beruhenden Lichtführung und Lichtauskopplung in dem Lichtleiter ein für einen Nutzer bei Sicht auf die Auskopplungsstruktur farblich inhomogenes Lichtmuster ergibt, und zwar auch dann, wenn die zugehörigen Lichtquellen unterschiedlicher Farbe nahe zueinander angeordnet sind.

### Beschreibung der Erfindung

Eine Aufgabe der Erfindung ist es daher, die Nachteile des Standes der Technik zumindest teilweise zu überwinden und insbesondere unter Einsatz konstruktiv möglichst einfacher Mittel eine Beleuchtungsvorrichtung der betreffenden Art bereitzustellen, die eine zumindest farblich homogenere Lichtabstrahlung bei geringen Lichtverlusten ermöglicht.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Eine erfindungsgemäße Beleuchtungsvorrichtung weist einen flächigen Lichtleiter mit mindestens einer randseitigen Lichteinkopplungsfläche und mindestens einer Lichtauskopplungsstruktur an einer seiner Flachseiten, mindestens einer ersten Lichtquelle, die zur Einkopplung von Licht einer ersten Farbe in die Lichteinkopplungsfläche eingerichtet ist, und mindestens einer zweiten Lichtquelle, die zur Einkopplung von Licht einer zweiten Farbe in die gleiche Lichteinkopplungsfläche eingerichtet ist, auf, wobei in dem Lichtleiter zwischen der Lichteinkopplungsfläche und der Lichtauskopplungsstruktur ein diffuser Bereich vorhanden ist, der Lichtleiter ansonsten transparent oder klar ausgebildet ist und der diffuse Bereich einen Abstand dT > 0 von der Lichteinkopplungsfläche aufweist.

Diese Beleuchtungsvorrichtung weist den Vorteil auf, dass aus dem Lichtleiter flächig abgestrahltes, gemischtes Nutzlicht farblich besonders homogen ist, und zwar orts- und winkelbezogen. Auch ist das gemischte Nutzlicht bezüglich seiner Helligkeitsverteilung besonders homogen. Zudem ist ein zugehöriger Lichtleiter vergleichsweise einfach herstellstellbar und kann ohne Anpassung anderer Komponenten anstelle bisheriger Lichtleiter verwendet werden. Auch lässt sich diese gleichmäßigere Helligkeitsverteilung mit nur geringen bis praktisch vernachlässigbaren Lichtverlusten erreichen.

Der flächige Lichtleiter ist insbesondere dazu eingerichtet, in ihn durch die mindestens eine randseitige Lichteinkopplungsfläche eingekoppeltes Licht mittels Totalreflexion an seiner freien Oberfläche zu leiten. Trifft das Licht auf die Auskopplungsstruktur, wird es so auf die andere, gegenüberliegende Flachseite abgelenkt, dass es dort austreten kann. Diese Flachseite, an der das Licht voll- oder teilflächig als Nutzlicht austritt, wird auch als Lichtauskopplungsseite bezeichnet.

Die Anordnung von transparentem Bereich und diffusem Bereich des Lichtleiters kann in einer Weiterbildung auch so beschrieben werden, dass sich zwischen der Lichteinkopplungsfläche und dem diffusen Bereich ein erster transparenter Teilbereich des Lichtleiters befindet, der in den diffusen Bereich übergeht, welcher wiederum in einen zweiten transparenten Teilbereich des Lichtleiters, der die Lichtauskopplungsstruktur aufweist, übergeht.

Der flächige Lichtleiter weist insbesondere eine Dicke oder Höhe auf, die merklich (z.B. um mindestens um eine Größenordnung) kleiner ist als die Ausdehnung in Breitenrichtung entlang der Lichteinkopplungsfläche und/oder in einer von der Lichteinkopplungsfläche wegführenden Tiefenrichtung. Der flächige Lichtleiter ist daher insbesondere ein plattenförmiger Lichtleiter. Er kann in seiner Plattenebene flach, gekrümmt oder freiförmig geformt sein. Typischerweise weist ein flächige Lichtleiter zwei gegenüberliegende, z.B. parallel zueinander angeordnete, Flachseiten oder Breitseiten auf, von denen eine Flachseite die Auskopplungsstruktur aufweist und die andere Flachseite als Lichtauskopplungsseite dient. Der Rand bzw. die Randabschnitte, die auch als Flachseite(n) bezeichnet werden können, kann bzw. können als die Lichteinkopplungsfläche(n) dienen. Es ist eine Weiterbildung, dass der flächige Lichtleiter ein oder mehrere Randabschnitte aufweist, die als Lichteinkopplungsflächen vorgesehen sind, z.B. gegenüberliegende Ränder bei in Draufsicht rechteckiger oder quaderförmiger Grundform. Der flächige Lichtleiter kann also ein oder mehrere Lichteinkopplungsflächen aufweisen.

Es ist eine Weiterbildung, dass die Lichtauskopplungsstruktur mehrere über die zugehörige Flachseite verteilte Rücksprünge und/oder Vorsprünge auf grundsätzlich bekannte Weise aufweist. Die Rücksprünge und/oder Vorsprünge können beispielsweise gleiche oder unterschiedliche Größe, gleiche oder unterschiedliche Form, gleiche oder unterschiedliche Dichte usw. aufweisen. Sie können dazu angeordnet sein, eine flächig gleichmäßig helle Abstrahlung des Nutzlichts zu bewirken oder können dazu angeordnet sein, eine flächig ungleichmäßig helle Abstrahlung des Nutzlichts zu bewirken, beispielsweise zur Darstellung von Information, Lichtmustern usw. Die Lichtauskopplungsstruktur kann auf ebenfalls grundsätzlich bekannte Weise zum gleichen Zweck alternativ oder zusätzlich Störstellen in dem Lichtleiter bereitstellen oder aufweisen.

Die Lichtquellen sind in Bezug auf die zugehörige Lichteinkopplungsfläche zueinander seitlich versetzt angeordnet oder lokalisiert.

Die erste Lichtfarbe und die zweite Lichtfarbe (und ggf. jede weitere Lichtfarbe) sind unterschiedliche und weisen diesbezüglich insbesondere unterschiedliche Soll-Farborte auf, die sich insbesondere nicht nur aus Herstellungstoleranzen ergeben, sondern gezielt ausgewählt oder vorgegeben sind. Unterschiedliche Lichtfarben können beispielsweise zwei oder mehr der folgenden Farben umfassen: rot, orange, grün, blau, bernsteinfarben ("amber"), minzgrünlich weiß ("EQ white"), kaltweiß, warmweiß, usw.

Es ist eine Weiterbildung, dass die Beleuchtungsvorrichtung auch noch mindestens eine dritte Lichtquelle, die zur Einkopplung von Licht einer dritten Farbe in die Lichteinkopplungsfläche eingerichtet ist, aufweist. So kann vorteilhafterweise Mischlicht mit noch mehr unterschiedlichen Farbanteilen erzeugt werden, was ein Erreichen eines gewünschten Summenfarborts des Mischlichts weiter erleichtert. Die Beleuchtungsvorrichtung kann ferner noch mindestens eine weitere (z.B. vierte, fünfte, usw.) Lichtquelle aufweisen, die zur Einkopplung von Licht mindestens einer weiteren (z.B. vierten, fünften, usw.) Farbe in die Lichteinkopplungsfläche eingerichtet ist. Die Farben können so gewählt sein, dass sie durch Lichtmischung ein weißes Nutzlicht erzeugen, z.B. die Farben RGB, RGBA mit zusätzlichem bernsteinfarbenem ("amber") Farbanteil, die Farben minzgrünlich-weiß und bernsteinfarben (auch als "Brilliant Mix" bezeichnet) usw.

Die Lichtquellen können beispielsweise LEDs sein, sind aber nicht darauf beschränkt. Die Lichtquellen unterschiedlicher Farbe können separat hergestellt und verbaut sein. Es ist eine Weiterbildung, dass zumindest zwei Lichtquellen unterschiedlicher Farbe auf einem gleichen Träger verbaut sind. So können in einer Weiterbildung Mehrfarb-LEDs wie sog. RGB-LEDs verwendet werden, die auf einem gleichen Träger (dem sog. "Submount") mehrere nebeneinander angeordnete Einzel-LEDs in Form von LED-Chips aufweisen, die Licht der Farben rot, grün und blau abstrahlen und dadurch ein weißes Mischlicht erzeugen. Dabei können pro Lichtfarbe ein oder mehrere LED-Chips vorhanden sein, wobei die RGB-LED dann beispielsweise spezieller auch als RGGBB-, RRGGB-Chip usw. bezeichnet werden können. Dieses Prinzip kann auf grundsätzlich bekannte Weise auf weitere oder andere Farben erweitert bzw. abgewandelt werden. Auch bei Mehrfarb-LEDs mit weißem Mischlicht ergibt sich aufgrund der auf innerer Totalreflexion in dem Lichtleiter beruhenden Lichtführung und Lichtauskopplung ohne den diffusen Bereich ein für einen Nutzer bei Sicht auf die Auskopplungsstruktur farblich inhomogenes Lichtmuster.

Es ist auch möglich, RGB-LEDs oder andere Mehrfarb-LEDs mit einzelnen LEDs zu kombinieren, z.B. RGB-LEDs mit einzelnen bernsteinfarbigen LEDs, usw.

Der diffuse Bereich dient dazu, in ihn an einer Lichteintrittsseite einfallendes Licht mehrerer Lichtfarben bei ihrem Durchtritt so zu streuen, dass dessen Winkelinformation verloren geht. Das dort diffus gestreute und weiter gemischte Licht tritt zum weitaus größten Teil an einer Lichtaustrittsseite des diffuse Bereichs wieder aus und propagiert weiter in dem Lichtleiter, bis es durch die Lichtauskopplungsstruktur abgelenkt wird und den Lichtleiter verlässt. Der diffuse Bereich ist in diesem Sinne ein transmittierender oder transmissiver Bereich. Die Lichtaustrittsseite kann auch als eine "virtuelle" flächige Lichtquelle angesehen werden. Je homogener das Licht an der Lichtaustrittsseite des diffusen Bereichs austritt, desto homogener ist auch das aus dem Lichtleiter ausgekoppelte Nutzlicht. Das an der Lichtaustrittsseite des diffusen Bereichs austretende Licht stellt eine Lichtmischung der an der Lichtaustrittsseite eingestrahlten Lichtanteile unterschiedlicher Farbe dar. Der diffuse Bereich kann beispielsweise transluzent oder opak sein.

Es ist eine Weiterbildung, dass der diffuse Bereich in dem Lichtleiter nur eine Teilfläche des von dem eingekoppelten Licht durchlaufenen Querschnitts einnimmt, z.B. nicht die gesamte Dicke und/oder nicht die gesamte Breite des Lichtleiters zwischen Lichteinkopplungsfläche und Auskopplungsstruktur. Dies kann vorteilhaft sein, um nur einen Teil des eingekoppelten Lichts diffus zu streuen, um einen ganz besonders geringen Lichtverlust zu bewirken. Diese Ausgestaltung kann insbesondere auch so beschrieben werden, dass der erste transparente Teilbereich und der zweite transparente Teilbereich miteinander verbunden sind bzw. einen einteiligen transparenten Bereich darstellen.

Es ist eine alternative, zur Erreichung einer besonders homogenen Lichtmischung besonders vorteilhafte Ausgestaltung, dass der diffuse Bereich als eine sich über die gesamte Dicke und/oder Breite des Lichtleiters zwischen Lichteinkopplungsfläche und Auskopplungsstruktur erstreckende Schicht ausgebildet ist. So kann verhindert werden, dass Licht ohne diffuse Streuung zum dem Bereich des Lichtleiters, der eine Auskopplungsstruktur aufweist, gelangt. Diese Ausgestaltung kann insbesondere auch so beschrieben werden, dass der erste transparente Teilbereich und der zweite transparente Teilbereich durch den diffusen Bereich voneinander getrennt sind.

Es ist eine Ausgestaltung, dass eine Tiefe des diffusen Bereich zwischen seiner Lichteintrittsseite und seiner Lichtaustrittsseite zwischen 1 mm und 6 mm, insbesondere zwischen 2 mm und 5 mm, insbesondere zwischen 2 mm und 4 mm, insbesondere zwischen 3 mm und 4 mm, beträgt. So wird der Vorteil erlangt, dass der Anteil des durch den diffusen Bereich durchlaufenden (und z.B. nicht rückreflektierten) Lichts bei sehr guter Homogenisierungswirkung besonders hoch ist, sich also Lichtverluste sehr gering halten lassen. Ein weiterer Vorteil ist, dass sich solche Tiefen zuverlässig und mit einem noch geringen Herstellungsaufwand erzeugen lassen.

Es ist eine Ausgestaltung, dass die Beleuchtungsvorrichtung zumindest mehrere erste Lichtquellen und mehrere zweite Lichtquellen und ggf. mehrere weitere (dritte, vierte usw.) Lichtquellen aufweist. Dadurch wird der Vorteil erreicht, dass Licht mit hohem Lichtstrom und besonders homogener Anfangsverteilung in die zugehörige Lichteinkopplungsfläche einkoppelbar ist. Insbesondere können mehrere Lichtquellen der gleichen Lichtfarbe entlang der Lichteinkopplungsfläche verteilt angeordnet sein, insbesondere äquidistant in Reihe verteilt. Beispielsweise können mehrere RGB-LEDs (einschließlich ihrer verschiedenen Abwandlungen) äquidistant in Reihe entlang der Lichteinkopplungsfläche angeordnet sein. Dann sind auch die zugehörigen Einzel-LEDs gleicher Lichtfarbe mit gleichem Abstand entlang der Lichteinkopplungsfläche angeordnet.

Es ist eine Weiterbildung, dass der diffuse Bereich einen vorgegebenen Abstand von der Lichteinkopplungsfläche aufweist. So wird vorteilhafterweise bereits eine Lichteintrittsfläche ("Lichteintrittsseite") des diffusen Bereich großflächiger und zudem farblich homogener beleuchtet als bei Anordnung des diffusen Bereichs direkt an der Lichteinkopplungsfläche. Bei dieser Weiterbildung wird unterschiedlich farbiges Licht von lokal unterschiedlichen Orten in die Lichteinkopplungsfläche eingekoppelt, durchläuft eine erste Teilstrecke hinter der Lichteinkopplungsfläche in einem transparenten Teilbereich des Lichtleiters, verläuft dann unter Lichtstreuung eine zweite Teilstrecke durch den diffusen Bereich und verläuft danach in einem transparenten Teilbereich des Lichtleiters, der eine Lichtauskopplungsstruktur aufweist, um dort mittels der Lichtauskopplungsstruktur aus dem Lichtleiter ausgekoppelt zu werden.

Es ist eine zu diesem Zweck vorteilhafte Weiterbildung, dass dann, wenn benachbarte gleichfarbige Lichtquellen einen bestimmten, insbesondere gleichen, Abstand zueinander aufweisen, ein Abstand des diffusen Bereichs von der Lichteinkopplungsfläche zumindest ungefähr dem Abstand benachbarter gleichfarbiger Lichtquellen entspricht, aber auch merklich größer sein kann.

Es ist eine besonders vorteilhafte Ausgestaltung, dass dann, wenn benachbarte gleichfarbige Lichtquellen einen bestimmten, insbesondere gleichen, Abstand zueinander aufweisen, ein Abstand des diffusen Bereichs von der Lichteinkopplungsfläche ungefähr dem Abstand benachbarter gleichfarbiger Lichtquellen entspricht. So wird die Lichteintrittsseite des diffusen Bereichs großflächig und bereits vergleichsweise farblich homogener als bei merklich geringerem Abstand zu der Lichteinkopplungsfläche beleuchtet, aber dennoch eine besonders kompakte Bauform erreicht.

Es ist eine Ausgestaltung, dass dann, wenn benachbarte Lichtquellen unterschiedlicher Lichtfarbe einen unterschiedlichen Abstand zueinander aufweisen (also z.B. benachbarte Lichtquellen der Lichtfarbe L1 einen Abstand A zueinander aufweisen und benachbarte Lichtquellen der Lichtfarbe L2 einen Abstand A' > A zueinander aufweisen), ein Abstand des diffusen Bereichs von der Lichteinkopplungsfläche zumindest ungefähr dem größten Abstand benachbarter gleichfarbiger Lichtquellen entspricht (also hier z.B. A'). Dadurch wird für mehrere unterschiedliche Abstände sichergestellt, dass sich an der als virtuelle Lichtquelle dienenden Lichtaustrittsseite des diffusen Bereichs eine besonders homogene Lichtverteilung ergibt.

Es ist eine zur kostengünstigen Herstellung des Lichtleiters besonders vorteilhafte Ausgestaltung, dass der Lichtleiter ein Mehrkomponenten-Kunststoffkörper, insbesondere 2-Komponenten (2K)-Kunststoffkörper, ist. Dessen diffuser Bereich besteht in einer Weiterbildung aus einem transparenten Kunststoff-Grundmaterial, das Lichtstreukörper aufweist, und dessen restlicher Bereich besteht aus mindestens einem gleichen transparenten Kunststoff-Grundmaterial ohne Lichtstreukörper. Jedoch kann der Lichtleiter auch unterschiedliche Grundmaterialien - beispielsweise unterschiedliche Kunststoffe - für den diffusen Bereich und den transparenten Bereich und/oder unterschiedliche Kunststoffe für unterschiedliche transparente Teilbereiche aufweisen. Darüber hinaus kann anstelle von Kunststoff auch anderes Material wie Glas usw. verwendet werden.

Die Aufgabe wird auch gelöst durch ein Fahrzeug, aufweisend mindestens eine Beleuchtungsvorrichtung wie oben beschrieben. Das Fahrzeug kann ein Kraftfahrzeug (z.B. ein Kraftwagen wie ein Personenkraftwagen, Lastkraftwagen, Bus usw. oder ein Motorrad), eine Eisenbahn, ein Wasserfahrzeug (z.B. ein Boot oder ein Schiff) oder ein Luftfahrzeug (z.B. ein Flugzeug oder ein Hubschrauber) sein.

Es ist eine Ausgestaltung, dass die Beleuchtungsvorrichtung eine Interieurbeleuchtung ist oder Teil einer Interieurbeleuchtung ist und die Auskopplungsstruktur für einen Fahrzeuginsassen direkt einsichtig ist. Für diesen Fall ergibt die vorliegende Erfindung einen besonderen Nutzen, da für den Fahrzeuginsassen nun kein farblich inhomogenes Licht mehr erkennbar ist.

Die Aufgabe wird ferner gelöst durch ein Verfahren, unterschiedlich farbiges Licht von lokal unterschiedlichen Orten in eine Lichteinkopplungsfläche eines flächigen Lichtleiters eingekoppelt wird, danach eine Teilstrecke unter Streuung durch einen diffusen Bereich des Lichtleiters verläuft und danach in einem transparenten Teilbereich des Lichtleiters verläuft, der eine Lichtauskopplungsstruktur aufweist. Das Verfahren kann analog zu der Beleuchtungsvorrichtung und zu dem Fahrzeug ausgebildet werden und ergibt die gleichen Vorteile.

Besonders bevorzugt ist ein Verfahren, bei dem unterschiedlich farbiges Licht von lokal unterschiedlichen Orten in eine Lichteinkopplungsfläche eines flächigen Lichtleiters eingekoppelt wird, das Licht eine erste Teilstrecke hinter der Lichteinkopplungsfläche in einem (insbesondere ersten) transparenten Teilbereich des Lichtleiters verläuft, danach eine zweite Teilstrecke unter Streuung durch den diffusen Bereich des Lichtleiters verläuft und danach in einem (insbesondere zweiten) transparenten Teilbereich des Lichtleiters, der eine Lichtauskopplungsstruktur aufweist, verläuft und mittels der Lichtauskopplungsstruktur aus dem Lichtleiter ausgekoppelt wird.

So ist es eine Ausgestaltung, dass das Verfahren ein Verfahren zum Beleuchten eines Innenraums eines Fahrzeugs ist und das Licht mittels der Lichtauskopplungsstruktur in den Innenraum ausgekoppelt wird.

### Kurze Figurenbeschreibung

Nachfolgend wird ein vorteilhaftes Ausführungsbeispiel der Erfindung unter Bezugnahme auf die begleitenden Figuren erläutert. Es zeigen:
- Figur 1: zeigt als Schnittdarstellung in Seitenansicht einen Ausschnitt aus einer Beleuchtungsvorrichtung gemäß einem ersten Ausführungsbeispiel;
- Figur 2: zeigt die Beleuchtungsvorrichtung gemäß dem ersten Ausführungsbeispiel in Draufsicht; und
- Figur 3: zeigt in Draufsicht eine Beleuchtungsvorrichtung gemäß einem zweiten Ausführungsbeispiel.

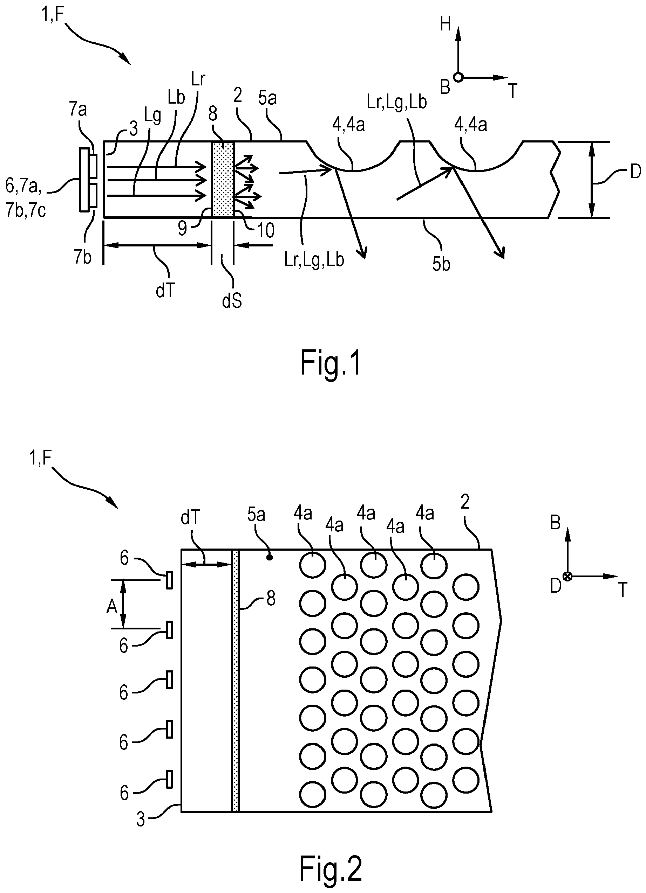

**Figur 1** zeigt als Schnittdarstellung in Seitenansicht einen Ausschnitt aus einer Beleuchtungsvorrichtung 1 eines Fahrzeugs F, die einen flächigen Lichtleiter 2 mit mindestens einer randseitigen Lichteinkopplungsfläche 3 und mindestens einer Lichtauskopplungsstruktur 4 an einer ersten Flachseite 5a aufweist. Insbesondere weist der Lichtleiter 2 eine Dicke D in Höhenerstreckung H zwischen 2 mm und 3,5 mm auf, speziell von ca. 3 mm. Er kann in Breitenerstreckung B (die hier senkrecht zur Bildebene verläuft) z.B. zwischen 5 mm und 100 mm messen. Der Lichtleiter 2 ist hier als ebene Platte dargestellt, kann aber auch zumindest abschnittsweise gekrümmt sein. Die Lichtauskopplungsstruktur 4 ist beispielhaft in Form von in die erste Flachseite 5a eingebrachten Vertiefungen oder Rücksprüngen 4a ausgebildet.

Vor oder an der Lichteinkopplungsfläche 3 ist eine RGB-LED 6 angeordnet, die mindestens drei seitlich getrennt angeordnete Einzel-LEDs 7a, 7b, 7c beispielsweise in Form jeweiliger LED-Chips aufweist, von denen hier nur die zwei Einzel-LEDs 7a und 7b eingezeichnet sind.

Die Einzel-LEDs 7a, 7b, 7c strahlen Licht unterschiedlicher Farbe aus, nämlich rotes Licht Lr, grünes Licht Lg und blaues Licht Lb. Die Einzel-LEDs werden deshalb auch als "rote" Einzel-LED 7a, "grüne" Einzel-LED 7b und "blaue" Einzel-LED 7c bezeichnet.

Das von den Einzel-LEDs 7a, 7b, 7c lokal verschieden abgestrahlte Licht Lr, Lg, Lb wird an der Lichteinkopplungsfläche 3 in den Lichtleiter 2 eingekoppelt und durch innere Totalreflexion in dem Lichtleiter 2 entlang einer Tiefenerstreckung T geführt. Trifft es auf die Lichtauskopplungsstruktur 4, wird es dort z.B. unter Totalreflexion an den Rücksprüngen 4a so weit umgelenkt, dass es aus einer als Lichtauskopplungsseite 5b dienenden zweiten Flachseite, die der ersten Flachseite 5a gegenüberliegt, als Nutzlicht aus dem Lichtleiter 2 austreten kann. Das ausgetretene Licht kann beispielsweise zur Beleuchtung eines Innenraums des die Beleuchtungsvorrichtung 1 aufweisenden Fahrzeugs F verwendet werden.

Das von den Einzel-LEDs 7a, 7b, 7c abgestrahlte Licht Lr, Lg, Lb mischt sich hinter der RGB-LED 6 und auch noch im Lichtleiter 2, z.B. zu Weißlicht. Jedoch ist diese Farbmischung nicht vollständig, so dass ein Nutzer bei direkter Betrachtung der Lichtauskopplungsseite 5b und damit auch der Auskopplungsstruktur 4 keine homogen weiß leuchtende Fläche wahrnimmt, sondern ein farbig inhomogenes Lichtbild ("Lichtteppich").

Um nun mit technisch einfach umsetzbaren Mitteln eine farbliche Homogenisierung des von dem Lichtleiter 2 nach außen abgestrahlten Nutzlichts zu bewirken, ist in dem Lichtleiter 2 zwischen der Lichteinkopplungsfläche 3 und der Lichtauskopplungsstruktur 4 in einem Abstand dT von der Lichteinkopplungsfläche 3 ein diffuser Bereich in Form einer sich über die gesamte Dicke D und Breite des Lichtleiters 2 an dieser Stelle erstreckenden diffusen Schicht 8 vorhanden. Die diffuse Schicht 8 weist eine insbesondere konstante Tiefe dS zwischen 2 mm und 4 mm auf.

Wird nun von den in Bezug auf die Lichteinkopplungsfläche 3 bzw. in der H,B-Ebene seitlich versetzt angeordneten Einzel-LEDs 7a, 7b, 7c das unterschiedlich farbige Licht Lr, Lg, Lb über die Lichteinkopplungsfläche 3 in den Lichtleiter 2 eingekoppelt, verläuft es teilweise gemischt für eine erste Teilstrecke hinter der Lichteinkopplungsfläche 3 in einem transparenten Teilbereich des Lichtleiters 2. Danach verläuft das Licht Lr, Lg, Lb nach Eintritt in eine Eintrittsseite 9 der diffusen Schicht 8 eine zweite Teilstrecke durch die diffuse Schicht 8. In der diffusen Schicht 8 wird das Licht Lr, Lg, Lb diffus gestreut und stark vermischt. In der diffusen Schicht 8 bleibt die Winkelinformation der Lichtstrahlen des Lichts Lr, Lg, Lb nicht erhalten und wird folglich homogenisiert. Dadurch wirkt eine der Eintrittsseite 9 gegenüberliegende Austrittsseite 10 der diffusen Schicht 8 als hochgradig homogene virtuelle Lichtquelle. Das an der Austrittsseite 10 stark homogenisierte Mischlicht Lr, Lg, Lb läuft folgend eine dritte Teilstrecke in dem Teilbereich des Lichtleiters 2, der die Lichtauskopplungsstruktur 4 aufweist, und wird von dort mittels der Lichtauskopplungsstruktur 4 aus dem Lichtleiter 2 ausgekoppelt.

Insbesondere kann der Lichtleiter 2 als ein 2-Komponenten-Kunststoffkörper ausgebildet sein, dessen diffuse Schicht 8 aus einem transparente Kunststoff-Grundmaterial besteht, dem Lichtstreukörper beigemischt sind, und dessen restlicher Bereich aus dem transparenten Kunststoff-Grundmaterial ohne Lichtstreukörper besteht.

**Figur 2** zeigt die Beleuchtungsvorrichtung 1 in Draufsicht. In Breitenerstreckung B sind entlang der Lichteinkopplungsfläche 3 mehrere RGB-LEDs 6 äquidistant mit einem vorgegebenen Abstand, insbesondere Mittenabstand, A angeordnet.

Um mittels der diffusen Schicht 8 eine besonders gute Homogenisierung der eingestrahlten Lichts Lr, Lg, Lb zu erreichen, sollte die Eintrittsseite 9 der diffusen Schicht 8 bereits möglichst homogen bestrahlt werden. Dies lässt sich durch einen großen Abstand dT zwischen der Lichteinkopplungsfläche 3 und der Eintrittsseite 9 der diffusen Schicht 8 unterstützen. Andererseits sollte der Abstand dT zur Ermöglichung einer besonders kompakten Bauform möglichst klein sein. Es hat sich nun überraschenderweise herausgestellt, dass ein Abstand dT • A = A ± 30%, insbesondere dT = A ± 10%, eine besonders vorteilhafter Kompromiss zwischen einer hohen Lichthomogenisierung an der Eintrittsseite 9 der diffusen Schicht 8 und einer kompakten Bauform darstellt. In anderen Worten hat es sich als besonders vorteilhaft herausgestellt, dass der Abstand dT des diffusen Bereichs 8 von der Lichteinkopplungsfläche 3 zumindest ungefähr dem Abstand A benachbarter gleichfarbiger Lichtquellen 7a, 7b oder 7c entspricht.

Obwohl die Lichteinkopplungsfläche 3 und die diffuse Schicht 8 hier geradlinig dargestellt sind, können sie auch einen anderen Verlauf annehmen, z.B. einen konvex oder konkav gekrümmten Verlauf. Dabei ist es für eine homogene Lichtabstrahlung an der Austrittsseite 10 der diffusen Schicht 8 besonders vorteilhaft, wenn die Form der diffusen Schicht 8 der Form der Lichteinkopplungsfläche 3 entspricht.

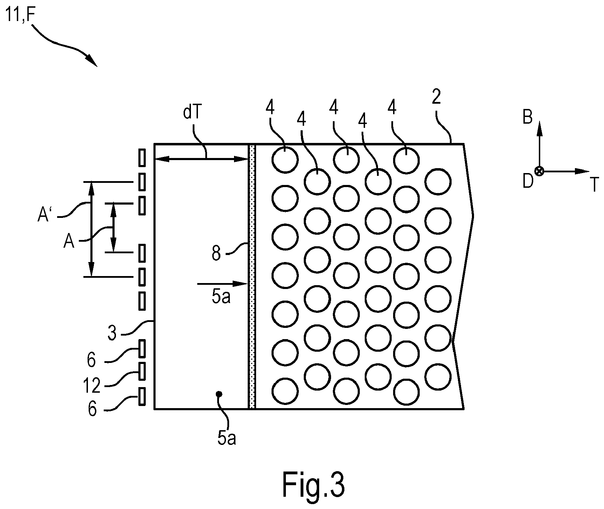

**Figur 3** zeigt in Draufsicht eine Beleuchtungsvorrichtung 11 gemäß einem zweiten Ausführungsbeispiel. Die Beleuchtungsvorrichtung 11 ist ähnlich der Beleuchtungsvorrichtung 1 aufgebaut, weist jedoch nun entlang der Lichteinkopplungsfläche 3 zusätzlich in jeder zweiten Lücke zwischen zwei RGB-LEDs 6 weitere Lichtquellen, insbesondere LEDs 12, auf. Diese können Licht La noch einer anderen Farbe abstrahlen, z.B. bernsteinfarbenes Licht ("amber") oder orangefarbenes Licht, um dem aus dem Lichtleiter 2 ausgekoppelten Mischlicht La, Lr, Lg, Lb eine wärmere Farbnote zu geben. Während der Abstand zwischen benachbarten RGB-LEDs 6 bzw. den zugehörigen Einzel-LEDs 7a, 7b, 7c weiterhin A beträgt, beträgt der Abstand zwischen den weiteren LEDs 12 A' = 2 A.

Für diesen Fall hat es sich herausgestellt, dass ein Abstand dT • A' = A' ± 30% einen besonders vorteilhaften Kompromiss zwischen einer hohen Lichthomogenisierung an der Austrittsseite 10 der diffusen Schicht 8 und einer kompakten Bauform darstellt. In anderen Worten hat es sich als besonders vorteilhaft herausgestellt, dass dann, wenn benachbarte gleichfarbige Lichtquellen La, Lr, Lg, Lb einen unterschiedlichen Abstand A und A' zueinander aufweisen, ein Abstand der diffusen Schicht 8 von der Lichteinkopplungsfläche 3 zumindest ungefähr dem größeren oder größten Abstand A' benachbarter gleichfarbiger Lichtquellen 12 entspricht.

Die Figuren sind lediglich schematische Darstellungen und dienen nur der Erläuterung der Erfindung. Gleiche oder gleichwirkende Elemente sind durchgängig mit den gleichen Bezugszeichen versehen.

### BEZUGSZEICHENLISTE

- 1: Beleuchtungsvorrichtung
- 2: Lichtleiter
- 3: Lichteinkopplungsfläche
- 4: Lichtauskopplungsstruktur
- 4a: Rücksprung
- 5a: Erste Flachseite
- 5b: Zweite Flachseite
- 6: RGB-LED
- 7a: Rote Einzel-LED
- 7b: Grüne Einzel-LED
- 7c: Blaue Einzel-LED
- 8: Diffuse Schicht
- 9: Eintrittsseite der diffusen Schicht
- 10: Austrittsseite der diffusen Schicht
- A: Abstand zwischen LEDs gleicher Lichtfarbe
- D: Dicke der diffusen Schicht
- dT: Abstand von der Lichteinkopplungsfläche
- dS: Tiefe der diffusen Schicht
- H: Höhenrichtung
- Lb: Blaues Licht
- Lg: Grünes Licht
- Lr: Rotes Licht

## Patentansprüche

1. Beleuchtungsvorrichtung (1; 11), aufweisend
- einen flächigen Lichtleiter (2) mit mindestens einer randseitigen Lichteinkopplungsfläche (3) und mindestens einer Lichtauskopplungsstruktur (4) an einer seiner Flachseiten (5a),
- mindestens eine erste Lichtquelle (7a, 7b, 7c, 12), die zur Einkopplung von Licht einer ersten Farbe (Lr, Lg, Lb, La) in die Lichteinkopplungsfläche (3) eingerichtet ist und
- mindestens eine dazu örtlich versetzte zweite Lichtquelle (7a, 7b, 7c, 12), die zur Einkopplung von Licht einer zweiten Farbe (Lr, Lg, Lb, La) in die gleiche Lichteinkopplungsfläche (3) eingerichtet ist,
wobei
- in dem Lichtleiter (2) zwischen der Lichteinkopplungsfläche (3) und der Lichtauskopplungsstruktur (4, 4a) ein diffuser Bereich (8) vorhanden ist,
- der Lichtleiter (2) ansonsten transparent ausgebildet ist und
- der diffuse Bereich (8) einen Abstand (dT) von der Lichteinkopplungsfläche (3) aufweist.

2. Beleuchtungsvorrichtung (1; 11) nach Anspruch 1, wobei der diffuse Bereich (8) als eine sich über die gesamte Dicke (D) und/oder Breite (B) des Lichtleiters (2) erstreckende Schicht ausgebildet ist.

3. Beleuchtungsvorrichtung (1; 11) nach einem der vorhergehenden Ansprüche, wobei eine Tiefe (dS) des diffusen Bereich zwischen 1 mm und 6 mm beträgt.

4. Beleuchtungsvorrichtung (1; 11) nach einem der vorhergehenden Ansprüche, aufweisend zumindest mehrere erste Lichtquellen (7a, 7b, 7c, 12) und mehrere zweite Lichtquellen (7a, 7b, 7c, 12), die insbesondere jeweils äquidistant entlang der Lichteinkopplungsfläche (3) angeordnet sind.

5. Beleuchtungsvorrichtung (1) nach Anspruch 4, bei dem dann, wenn benachbarte gleichfarbige Lichtquellen (7a, 7b, 7c) einen gleichen Abstand (A) zueinander aufweisen, der Abstand (dT) des diffusen Bereichs (8) von der Lichteinkopplungsfläche (3) zumindest ungefähr dem Abstand (A) der benachbarten gleichfarbigen Lichtquellen (7a, 7b, 7c) entspricht.

6. Beleuchtungsvorrichtung (1) nach Anspruch 5, bei dem zumindest zwei Lichtquellen (7a, 7b, 7c) unterschiedlicher Lichtfarbe auf seitlich versetzt auf einem gemeinsamen Träger angeordnet sind.

7. Beleuchtungsvorrichtung (11) nach einem der vorhergehenden Ansprüche, wobei bei dem dann, wenn benachbarte Lichtquellen unterschiedlicher Lichtfarbe (7a, 7b, 7c, 12) einen unterschiedlichen Abstand (A, A') zueinander aufweisen, der Abstand (dT) des diffusen Bereichs von der Lichteinkopplungsfläche (3) zumindest ungefähr dem größten Abstand (A') benachbarter gleichfarbiger Lichtquellen (12) entspricht.

8. Beleuchtungsvorrichtung (1; 11) nach einem der vorhergehenden Ansprüche, wobei der Lichtleiter (2) ein Mehrkomponenten-Kunststoffkörper, insbesondere 2K-Kunststoffkörper ist, dessen diffuser Bereich (8) aus einem transparenten Kunststoff-Grundmaterial besteht, das Lichtstreukörper aufweist, und dessen restlicher Bereich aus dem transparenten Kunststoff-Grundmaterial ohne Lichtstreukörper besteht.

9. Fahrzeug (F), aufweisend mindestens eine Beleuchtungsvorrichtung (1; 11) nach einem der vorhergehenden Ansprüche.

10. Fahrzeug nach Anspruch 9, bei dem die Beleuchtungsvorrichtung (1; 11) eine Interieurbeleuchtung ist oder Teil einer Interieurbeleuchtung ist und die Auskopplungsstruktur (4) für einen Fahrzeuginsassen direkt einsichtig ist.

11. Verfahren, bei dem
- unterschiedlich farbiges Licht (Lr, Lg, Lb) von lokal unterschiedlichen Orten in eine Lichteinkopplungsfläche (3) eines flächigen Lichtleiters (2) eingekoppelt wird,
- das Licht (Lr, Lg, Lb) eine erste Teilstrecke hinter der Lichteinkopplungsfläche (3) in einem transparenten Teilbereich des Lichtleiters (2) verläuft, danach
- eine zweite Teilstrecke durch einen diffusen Bereich (8) des Lichtleiters (8) verläuft und danach in einem transparenten Teilbereich des Lichtleiters (8) verläuft, der eine Lichtauskopplungsstruktur (4) aufweist und
- mittels der Lichtauskopplungsstruktur (4) aus dem Lichtleiter (2) ausgekoppelt wird.

12. Verfahren nach Anspruch 11, wobei das Verfahren ein Verfahren zum Beleuchten eines Innenraums eines Fahrzeugs ist und das Licht mittels der Lichtauskopplungsstruktur in den Innenraum ausgekoppelt wird.
